# EUROPEAN PATENT SPECIFICATION

(11) **EP 2 990 563 B1**
(45) Date of publication and mention of the grant of the patent: **08.05.2019**
(21) Application number: 15189217.1
(22) Date of filing: 19.12.2007
(51) Int. Cl.: E04D 13/035, E04D 13/03, F16B 21/02

(54) **A FASTENER AND A WEATHER SHIELD**
BEFESTIGUNG UND WITTERUNGSSCHUTZ
ÉLÉMENT DE FIXATION ET ÉCRAN DE PROTECTION CONTRE LES INTEMPÉRIES

(43) Date of publication of application: 02.03.2016
(62) Divisional of application: 07846451.8
(73) Proprietor: VKR Holding A/S, 2970 Hørsholm (DK)
(72) Inventor: JENSEN, Bent Kirk, 2000 Frederiksberg (DK)
(74) Representative: AWA Denmark A/S

(56) References cited:
- EP-A1- 0 169 772
- DE-B3-102006 020 697
- DE-U1- 9 002 503
- FR-A1- 2 818 252
- FR-A1- 2 821 130
- US-B1- 6 474 921

## Description

The present invention relates in a first aspect to a fastener according to the introductory part of claim 1.

To shield off a window portion positioned more or less horizontally in a flat roof it is known to position a dome-shaped weather shield above a sash of the window portion to form a skylight or roof window. The sash is embedded in a frame, which is secured to the roof, the sash and frame together forming the window portion of the window or skylight. The purpose of the weather shield is to divert water from rainfall, leaves etc. from the window by means of gravitational forces. The weather shield is typically attached to the sash by means of screws or bolts, an oblong part of each screw or bolt being guided through a peripheral hole of the weather shield. A head part of the screw or bolt abuts an upper surface of the weather shield, the oblong part extending through the hole of the weather shield to be fastened in corresponding bores of the sash.

The weather shield is typically transported separately from the sash and mounted on the sash after the window portion has been mounted in the roof. A tool such as a suitable screwdriver corresponding to slots of the screws or bolts is necessary to fasten the screws or bolts through the holes of the weather shield and into the sash. The fastening process is thus slow and cumbersome. During repairs, cleaning or dismounting the window it is equally problematic to release the weather shield from the sash.

DE 10 2006 020697 B3 discloses a device for fastening light domes.

FR 2 821 130 A1 discloses a fastener according to the introductory part of claim 1.

It is the object of the invention to provide a fastener of the type mentioned in the introduction, with which it is possible to fast, reliably and readily attach and release a weather shield to a window sash without the use of a separate tool.

This object is met with a fastener as described in the introduction, which is characterized by the features of the characterizing part of claim 1.

According to the invention it is thus possible to manually activate the fastener without the use of a separate tool. A simple movement by hand will engage the first fastening means of the fastener with a corresponding engagement means of the sash. It is thus made possible to attach and release a weather shield to a window sash in a fast, reliable and easy way.

In an embodiment of the fastener according to the invention said connection part extends into said first fastening means comprising a radial protrusion with an engagement member for being snap-locked to said corresponding engagement means of said sash on activation of said fastener, thereby fastening said weather shield to said sash. In a development of this embodiment said radial projection is clog-shaped, an upwards projecting tip end of said clog shape forming said engagement member of said fastener. In a further development said first fastening means comprises a further radial protrusion corresponding to and protruding substantially oppositely to said radial protrusion for being snap-locked to corresponding engagement means of said sash. Hereby, a stronger fastening to the sash is provided, preventing the fastener from being tilted when being rotated to or from a locked position.

In another embodiment said first fastening means of said fastener is adapted to engage and be released from said engagement means of said sash member by means of rotation of said fastener.

In another embodiment said head part comprises grip means operable by hand to rotate said fastener such as to provide engagement between said first fastening means of said fastener and said engagement means of said sash. In a development of this embodiment said grip means comprises two finger depressions positioned such as, in a fastened position of said fastener, to allow for rain water and snow falling on said weather shield to pass said head part.

According to the invention a gasket member for abutting said upper surface of said weather shield is provided on a lower surface of said head part. The gasket hinders intrusion of water though the hole in the weather shield. Elasticity of the gasket provides for an easier fastening of the fastener.

In another embodiment the fastener further comprises a second fastening means, preferably a snap lock, adapted to be positioned abutting a lower surface of said weather shield when said connection part extends through said hole of said weather shield to, cooperating with said head part, be substantially unreleasable from and rotatable in relation to said weather shield. Hereby, the fastener will be able to remain secured to a weather shield even in a dismounted state of the weather shield, making it even easier to fasten the weather shield to the sash.

In another embodiment said fastener is positioned to fasten a sash of a window portion to a weather shield covering said sash, said fastener extending through a peripheral hole of said weather shield to engage said sash, said sash comprising extruded sash members with a hollow sash member profile. If the engagement member is clog-shaped, an upwards projecting tip end of said clog shape forming said engagement member of said fastener, said engagement means of said sash member preferably comprises a downwards protruding bead, said tip end of said engagement member of said fastener extending upwards to engage said downwards protruding bead such as to snap lock said fastener and said sash member to each other on rotation of said fastener. In another development of this embodiment said peripheral hole is formed in an upwardly protruding dimple of said weather shield, which provides elasticity of the weather shield to ensure that the weather shield is not destroyed on activation of the fastener. In another development said sash on an upper surface comprises a longitudinally extending resilient sealing member abutting a lower surface of said weather shield, which similarly provides elasticity ensuring that the weather shield is not destroyed on activation of the fastener. In another development said window portion comprises a top, a bottom and two side sash members defining said window sash, and a top, a bottom and two side frame members defining a window frame, said bottom sash member being hinged to said bottom frame member by means of a pivot hinge defining a pivot axis such as to pivotally connect said window sash to said window frame.

In a second aspect the present invention relates to a weather shield for being fastened to a hollow sash member profile of a window sash, characterized by comprising a number of fasteners according to the first aspect of the invention, respective head parts of said fasteners being positioned abutting an upper surface of said weather shield, respective connection parts of said fasteners extending through peripheral holes of said weather shield.

The second aspect of the invention provides advantages similar to or like the advantages described above in connection with the first aspect of the invention.

In a preferred embodiment of the weather shield according to the second aspect of the invention said respective fasteners comprise a second fastening means, preferably a snap lock, positioned abutting a lower surface of said weather shield, said fasteners, due to cooperation between said second fastening means and said head part, being substantially unreleasable from and rotatable in relation to said weather shield.

The invention will be explained in detail in the following by means of examples of embodiments with reference to the schematic drawing, in which
Fig. 1 is a perspective view of an embodiment of a window,
Fig. 2 is a cross-sectional view of the window according to Fig. 1,
Fig. 3 is a detail of the cross-sectional view of Fig. 2,
Fig. 4 is a perspective view of an embodiment of a fastener according to the first aspect of the present invention,
Fig. 5 is a side view of the fastener of Fig. 4,
Fig. 6 is an end view of the fastener of Fig. 4 seen from the right of the fastener as shown in Fig. 5, and
Fig. 7 is an end view of the fastener of Fig. 4 seen from the left of the fastener as shown in Fig. 5.

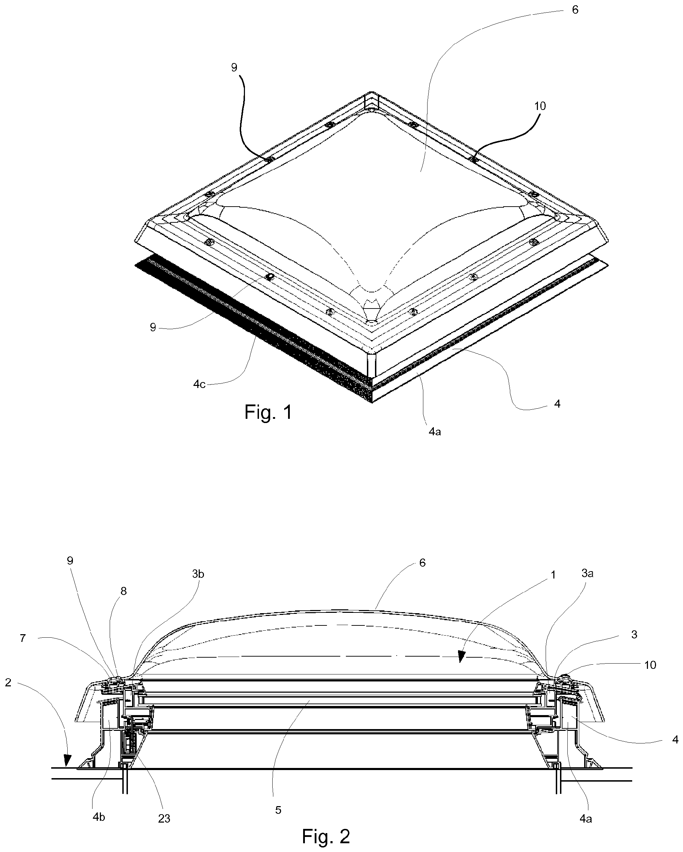

Figs 1 and 2 show different views of a window or skylight. The window comprises a rectangular window portion 1 in the form of a Velux® top-hung roof window (GHL type), which is able to pivot about a horizontal axis positioned along a bottom of the skylight (to the lower right in Fig. 1 and to the right in Fig. 2). The window portion 1 is installed in a flat roof 2 and comprises a sash 3 positioned in a frame 4, which are both made up of extruded, hollow PVC profiles (in the present context flat roofs are defined as roofs having an inclination in relation to horizontal of less than about 15°). In other embodiments the frame and sash may be in the form of for example extruded aluminium profiles and they may comprise wooden parts.

The sash 3 comprises a bottom 3a, a top 3b and two side (not shown) sash members and encloses a windowpane 5 with two layers of glazing sandwiching a layer of gas to provide insulation glazing. The frame 4 comprises a bottom 4a, a top 4b and two side frame members, of which only one side frame member, 4c, is shown (in Fig. 1). The bottom sash member 3a is pivotally connected to the bottom frame member 4a by means of two hinges (not shown) defining a pivot axis.

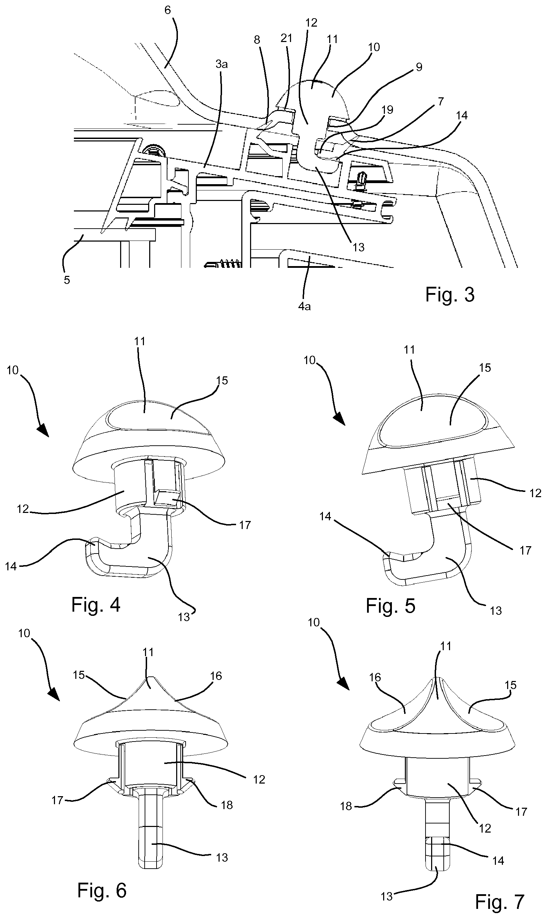

A weather shield according to the second aspect of the invention in the form of a dome-shaped acrylic plate or dome 6 is attached to the sash 3 protecting the window portion 1. Pivoting the sash 3 and dome 6 about the pivot axis by means of a chain operator 23 embedded in the top frame member 4b provides movement between an open and a closed position of the window. The chain operator 23 may be driven automatically and may be radio controlled. Supporting the dome portion 6 are longitudinally extending sealing projections or weather strips 7, 8, sealing the sash 3 against the dome portion 6, cf. Figs 2 and 3.

The weather shield 6 comprises peripheral holes 9. In Figs 1 and 2 a fastener 10 has been inserted through one of the peripheral holes 9, the fastener 10 being an embodiment of the fastener according to the invention. Note that in the present embodiment similar, not shown fasteners are to be inserted in the remaining holes 9 of the weather shield 6 as shown in Fig. 1. Fig. 3 shows a detail of the cross-sectional view of Fig. 2.

The fastener 10 is shown in more detail in Figs 4 to 7. It comprises a head part 11 connected to a connection part 12, the outer dimensions of which correspond to the inner dimensions of the holes 9. The connection part 12 extends into a first fastening means in the form of a clog-shaped radial protrusion 13 with an engagement member in the form of an upwards projecting tip end 14 of said clog shape. The head part 11 comprises grip means in the form of two finger depressions 15, 16. The connection part 12 comprises second fastening means in the form of two oppositely positioned snap locks 17, 18. The fastener 10 is integrally molded from Zytel 80633, i.e. acrylic with 33% glass.

In Figs 2 and 3 the fastener 10 is shown in a locked condition in which it fastens the weather shield 6 to the sash 3. The head part 11 has a lower, flat surface, which is positioned abutting an upper surface of the weather shield 6, the connection part 12 extending through a hole of the weather shield 6 into the bottom sash member 3a. As is visible in Fig. 3 the peripheral hole of this figure is formed in an upwardly protruding dimple 20 of the weather shield 6; the same is the case for all the peripheral holes 9. In the locked position the tip end 14 of the radial protrusion 13 engages a corresponding engagement means of the sash 3 in the form of a downwards protruding longitudinally extending bead 19. The bead 19 extends in the entire circumference of the sash 3, forming a tip end of a likewise longitudinally extending part of the sash, making it somewhat resilient in an upwards direction.

When inserting the fastener into the hole the snap locks 17, 18 are positioned abutting a lower surface of the weather shield 6. Hereby, the lower surface of the head part 11 and the snap locks 17, 18 at all times cooperate to secure the fastener in the hole. To release the fastener 10 from the hole, the snap locks 17, 18 will need to be released from the inside of the weather shield 6.

The finger depressions 15, 16 are adapted such that in the fastened position of the fastener 10 as shown in Figs. 2 and 3 rain water and snow are allowed to readily pass the head part 11.

Between the dimple 20 and the lower surface of the head part 11 a soft acrylic gasket member 21 is provided. This gasket member 21 is somewhat resilient, providing for a corresponding resiliency of the fastener 10, which is made use of when fastening or releasing the fastener 10 as is explained in more detail below. In the present embodiment the gasket member 21 is secured, i.e. glued to the dimple 20; in other embodiments it may form part of the fastener.

The tip end 14 is released from the bead 19 of the bottom sash member 3a by means of rotation of said fastener. Rotation can be carried out without the use of a separate tool placing a thumb and an index finger of one hand in the finger depressions 15, 16, respectively. The fastener 10 can be rotated either way about the connection part 12, whereby the tip end 14 passes the downwards protruding bead 19, and the fastener 10 and weather shield 6 is released from the sash 3. The combined resilience of the gasket member 21, longitudinal sealing members 7, 8, bead 19 and fastener itself makes it possible for the tip end 14 to pass the bead 19 with a snapping sound and sensation telling a user that the fastener 10 has been released.

From the released position rotating the fastener 10 to snap back to the original, locked position is done in a corresponding manner.

The gasket 21 and sealing members 7, 8 also ensure that the weather shield 6 is watertight in the area of the hole in the weather shield 6.

The engagement member of the fastener and the engagement means of the sash can be provided in other forms. The tip ends may for example turn opposite ways compared to the embodiment in the drawings, still providing a suitable snap lock.

If one wishes a stronger fastener, it may be manufactured partly or in whole from for example zinc or aluminium or other suitable materials. Also, a further radial protrusion corresponding to and protruding oppositely to the radial protrusion 13 may be provided to provide for a stronger attachment. This would also prevent the fastener from tilting when being rotated to or from a locked position (see below). The further radial protrusion may be similar to the radial protrusion 13.

## Claims

1. A weather shield fastener (10) to be guided through a peripheral hole (9) of a weather shield (6) for fastening the latter to a hollow sash member profile of a window sash (3), said fastener (10) comprising a head part (11) connected to a connection part (12), said head part being adapted to be positioned abutting an upper surface of said weather shield (6), said connection part (12) extending through said hole (9) of said weather shield (6) into said sash (3),
said fastener (10) further comprising a first fastening means for locking said fastener (10) to a corresponding engagement means of said sash (3) on activation of said fastener (10), thereby fastening said weather shield (6) to said sash (3),
said connection part (12) extending into said first fastening means comprising a radial protrusion (13) with an engagement member for being snap-locked to said corresponding engagement means of said sash (3) on activation of said fastener (10), thereby fastening said weather shield (6) to said sash (3),
said first fastening means of said fastener (10) is adapted to engage and be released from said engagement means of said sash member by means of rotation of said fastener (10),
wherein said radial protrusion (13) is clog-shaped, an upwards projecting tip end (14) of said clog shape forming said engagement member of said fastener (10),
**characterized in that**
a gasket member (21) for abutting said upper surface of said weather shield (6) is provided on a lower surface of said head part (11),
elasticity of the gasket (21) providing for an easier fastening of the fastener (10).

2. A fastener (10) according to claim 1, wherein said first fastening means of said fastener is adapted to engage and be released from said engagement means of said sash member by means of rotation of said fastener (10).

3. A fastener (10) according to any one of the previous claims, wherein said head part (11) comprises grip means operable by hand to rotate said fastener (10) such as to provide engagement between said first fastening means of said fastener (10) and said engagement means of said sash (3).

4. A fastener (10) according to claim 3, wherein said grip means comprises two finger depressions (15, 16) positioned such as, in a fastened position of said fastener (10), to allow for rain water and snow falling on said weather shield (6) to pass said head part (11).

5. A weather shield fastener (10) according to any one of the previous claims, which is manufactured from zinc or aluminium.

6. A fastener (10) according to any one of the previous claims, further comprising a second fastening means, preferably a snap lock (17, 18), adapted to be positioned abutting a lower surface of said weather shield (6) when said connection part (12) extends through said hole (9) of said weather shield (6) to, cooperating with said head part (11), be substantially unreleasable from and rotatable in relation to said weather shield (6).

7. A fastener (10) according to any one of the previous claims, said fastener (10) being configured so that a resilience of the gasket member (21) contributes to making it possible for the tip end to pass a bead of the window portion with a snapping sound and sensation telling a user that the fastener (10) has been released.

8. A fastener (10) according to any one of the previous claims, wherein said fastener (10) is configured so that a combined resilience of the gasket member (21), longitudinal sealing members and a bead of the window portion, and the fastener (10) itself make it possible for the tip end to pass the bead with a snapping sound and sensation telling a user that the fastener (10) has been released.

9. A fastener (10) according to any one of the previous claims. wherein said fastener (10) is configured so that the fastener (10) can be rotated either way about the connection part, the tip end being suitable for passing a downwards protruding bead of the sash member profile so that the fastener (10) and weather shield (6) are released from the sash (3), a combined resilience of the gasket member (21), longitudinal sealing members, bead and fastener (10) itself making it possible for the tip end to pass the bead with a snapping sound and sensation telling a user that the fastener (10) has been released, and wherein, from the released position, the fastener (10) is suitable for being snapped back to the original, locked position in a corresponding manner.

10. A weather shield (6) and a window portion (1), comprising a fastener according to any one of the previous claims, wherein said fastener (10) is positioned to fasten a sash (3) of the window portion to the weather shield (6) covering said sash (3), said fastener (10) extending through a peripheral hole (9) of said weather shield (6) to engage said sash (3), said sash (3) comprising extruded sash members with a hollow sash member profile.

11. A weather shield (6) and a window portion (1) according to claim 10, wherein the fastener (10) is according to claim 1, and wherein said engagement means of said sash member comprises a downwards protruding bead (19), said tip end (14) of said engagement member of said fastener (10) extending upwards to engage said downwards protruding bead (19) such as to snap lock said fastener (10) and said sash member to each other on rotation of said fastener (10).

12. A weather shield (6) and a window portion (1) according to claim 10 or 11, wherein said peripheral hole (9) is formed in an upwardly protruding dimple (20) of said weather shield (6).

13. A weather shield (6) and a window portion (1) according to any one of claims 10 to 12, wherein said sash (3) on an upper surface comprises a longitudinally extending resilient sealing member (7, 8) abutting a lower surface of said weather shield (6).

14. A weather shield (6) and a window portion (1) according to any one of claims 10 to 13, wherein said window portion comprises a top (3b), a bottom (3a) and two side (3c) sash members defining said window sash (3), and a top, a bottom and two side frame members defining a window frame (4), said bottom sash member (3a) being hinged to said bottom frame member (4a) by means of a pivot hinge defining a pivot axis such as to pivotally connect said window sash (3) to said window frame (4).

15. A weather shield (6) for being fastened to a hollow sash member profile of a window sash (3), **characterized by** comprising a number of fasteners (10) according to any one of claims 1 to 9, respective head parts (11) of said fasteners being positioned abutting an upper surface of said weather shield (6), respective connection parts (12) of said fasteners extending through peripheral holes (9) of said weather shield (6).

## Patentansprüche

1. Witterungsschutzbefestigung (10), die durch eine Randöffnung (9) eines Witterungsschutzes (6) geführt wird, um diesen an einem hohlen Flügelelementprofil eines Fensterflügels (3) zu befestigen, wobei die Befestigung (10) ein Kopfteil (11) umfasst, das mit einem Verbindungsteil (12) verbunden ist, wobei das Kopfteil dazu angepasst ist, an eine obere Fläche des Witterungsschutzes (6) anschlagend positioniert zu sein, wobei sich das Verbindungsteil (12) durch die Öffnung (9) des Witterungsschutzes (6) in den Flügel (3) erstreckt,
wobei die Befestigung (10) ferner ein erstes Befestigungsmittel zum Verriegeln der Befestigung (10) an einem entsprechenden Eingriffsmittel des Flügels (3) bei der Aktivierung der Befestigung (10) umfasst, wobei der Witterungsschutz (6) an dem Flügel (3) befestigt wird, wobei sich das Verbindungsteil (12) in das erste Befestigungsmittel erstreckt, das einen radialen Vorsprung (13) mit einem Eingriffselement umfasst, um in das entsprechende Eingriffsmittel des Flügels (3) bei Aktivierung der Befestigung (10) eingerastet zu werden, wodurch der Witterungsschutz (6) an dem Flügel (3) befestigt wird,
wobei das erste Befestigungsmittel der Befestigung (10) dazu angepasst ist, durch Drehen der Befestigung (10) in das Eingriffsmittel des Flügelelements einzugreifen und sich von diesem zu lösen,
wobei der radiale Vorsprung (13) stiefelförmig ist, wobei ein nach oben vorstehendes, spitzes Ende (14) der Stiefelform das Eingriffselement der Befestigung (10) ausbildet,
**dadurch gekennzeichnet, dass**
ein Flachdichtungselement (21) zum Anstoßen an die obere Fläche des Witterungsschutzes (6) auf einer unteren Fläche des Kopfteils (11) bereitgestellt ist,
die Elastizität der Flachdichtung (21) für ein einfacheres Befestigen der Befestigung (10) sorgt.

2. Befestigung (10) nach Anspruch 1, wobei das erste Befestigungsmittel der Befestigung dazu angepasst ist, durch Drehen der Befestigung (10) in das Eingriffsmittel des Flügelelements einzugreifen und sich von diesem zu lösen.

3. Befestigung (10) nach einem der vorstehenden Ansprüche, wobei das Kopfteil (11) Griffmittel umfasst, die manuell betätigt werden können, um die Befestigung (10) zu drehen, um einen Eingriff zwischen dem ersten Befestigungsmittel der Befestigung (10) und dem Befestigungsmittel des Flügels (3) bereitzustellen.

4. Befestigung (10) nach Anspruch 3, wobei der Griff zwei Fingermulden (15, 16) umfasst, die so positioniert sind, dass in der befestigten Position der Befestigung (10) auf den Witterungsschutz (6) fallendes Regenwasser und fallender Schnee an dem Kopfteil (11) vorbeilaufen kann.

5. Witterungsschutzbefestigung (10) nach einem der vorstehenden Ansprüche, die aus Zink oder Aluminium hergestellt ist.

6. Befestigung (10) nach einem der vorstehenden Ansprüche, ferner ein zweites Befestigungsmittel umfassend, bevorzugt eine Schnappverriegelung (17, 18), die dazu angepasst ist, an einer unteren Fläche des Witterungsschutzes (6) anstoßend positioniert zu sein, wenn sich das Verbindungsteil (12) durch die Öffnung (9) des Witterungsschutzes (6) erstreckt, um in Zusammenwirkung mit dem Kopfteil (11) im Wesentlichen von dem Witterungsschutz (6) unlösbar und in Bezug zu diesem drehbar zu sein.

7. Befestigung (10) nach einem der vorstehenden Ansprüche, wobei die Befestigung (10) dazu ausgelegt ist, dass eine Elastizität des Flachdichtungselements (21) dazu beiträgt, es dem spitzen Ende zu ermöglichen, sich an einer Wulst des Fensterabschnitts mit einem Schnappgeräusch und -gefühl vorbeizubewegen, was dem Benutzer signalisiert, dass die Befestigung (10) gelöst wurde.

8. Befestigung (10) nach einem der vorstehenden Ansprüche, wobei die Befestigung (10) dazu ausgelegt ist, dass die gemeinsame Flexibilität des Flachdichtungselements (21), der Längsdichtungselemente und einer Wulst des Fensterabschnitts und die Befestigung (10) selbst, es dem spitzen Ende ermöglichen, sich an einer Wulst des Fensterabschnitts mit einem Schnappgeräusch und -gefühl vorbeizubewegen, was dem Benutzer signalisiert, dass die Befestigung (10) gelöst wurde.

9. Befestigung (10) nach einem der vorstehenden Ansprüche, wobei die Befestigung (10) dazu ausgelegt ist, dass die Befestigung (10) in eine beliebige Richtung um das Verbindungsteil gedreht werden kann, wobei das spitze Ende dafür geeignet ist, sich an einer nach unten vorstehenden Wulst des Flügelelementprofils vorbeizubewegen, sodass die Befestigung (10) und der Witterungsschutz (6) von dem Flügel (3) gelöst werden, wobei eine gemeinsame Flexibilität des Flachdichtungselements (21), der Längsdichtungselemente, der Wulst und der Befestigung (10) selbst es dem spitzen Ende ermöglicht, sich an der Wulst mit einem Schnappgeräusch und -gefühl vorbeizubewegen, was einem Benutzer signalisiert, dass die Befestigung (10) gelöst wurde, und wobei die Befestigung (10) dafür geeignet ist, auf eine entsprechende Weise aus der gelösten Position wieder in die ursprüngliche, verriegelte Position einzurasten.

10. Witterungsschutz (6) und Fensterabschnitt (1), die eine Befestigung nach einem der vorstehenden Ansprüche umfassen, wobei die Befestigung (10) positioniert ist, um einen Flügel (3) des Fensterabschnitts an dem Witterungsschutz (6), der den Flügel (3) abdeckt, zu befestigen, wobei sich die Befestigung (10) durch eine Randöffnung (9) des Witterungsschutzes (6) erstreckt, um in den Flügel (3) einzugreifen, wobei der Flügel (3) stranggepresste Flügelelemente mit einem hohlen Flügelelementprofil umfasst.

11. Witterungsschutz (6) und Fensterabschnitt (1) nach Anspruch 10, wobei die Befestigung (10) Anspruch 1 entspricht, und wobei das Eingriffsmittel des Flügelelements eine nach unten vorstehende Wulst (19) umfasst, wobei sich das spitze Ende (14) des Eingriffselements der Befestigung (10) nach oben erstreckt, um in die nach unten vorstehende Wulst (19) einzugreifen, um die Befestigung (10) und das Flügelelement beim Drehen der Befestigung (10) miteinander einzurasten.

12. Witterungsschutz (6) und Fensterabschnitt (1) nach Anspruch 10 oder 11, wobei die Randöffnung (9) in einer nach oben vorstehenden Vertiefung (20) des Witterungsschutzes (6) ausgebildet ist.

13. Witterungsschutz (6) und Fensterabschnitt (1) nach einem der Ansprüche 10 bis 12, wobei der Flügel (3) auf einer oberen Fläche ein sich längs erstreckendes, flexibles Dichtungselement (7, 8) umfasst, das an eine untere Fläche des Witterungsschutzes (6) anstößt.

14. Witterungsschutz (6) und Fensterabschnitt (1) nach einem der Ansprüche 10 bis 13, wobei der Fensterabschnitt ein oberes (3b), ein unteres (3a) und zwei seitliche (3c) Fensterelemente, die den Fensterflügel (3) definieren, und ein oberes, ein unteres und zwei seitliche Rahmenelemente, die den Fensterrahmen (4) definieren, umfasst, wobei das untere Flügelelement (3a) über ein Scharniergelenk gelenkig an dem unteren Rahmenelement (4a) befestigt ist, wodurch eine Schwenkachse definiert wird, um den Fensterflügel (3) schwenkbar mit dem Fensterrahmen (4) zu verbinden.

15. Witterungsschutz (6) zum Befestigen an einem hohlen Flügelelementprofil eines Fensterflügels (3), **gekennzeichnet durch** das Umfassen mehrerer Befestigungen (10) nach einem der Ansprüche 1 bis 9, wobei entsprechende Kopfteile (11) der Befestigungen positioniert sind, um an einer oberen Fläche des Witterungsschutzes (6) anzustoßen, wobei sich entsprechende Verbindungsteile (12) der Befestigungen durch Randöffnungen (9) des Witterungsschutzes (6) erstrecken.

## Revendications

1. Élément de fixation (10) pour protection contre les intempéries, destiné à être guidé à travers un trou périphérique (9) d'une protection contre les intempéries (6) pour attacher cette dernière à un profilé d'organe de châssis creux d'un châssis de fenêtre (3), ledit élément de fixation (10) comprenant une partie de tête (11) connectée à une partie de connexion (12), ladite partie de tête étant prévue pour être positionnée en butée contre une surface supérieure de ladite protection contre les intempéries (6), ladite partie de connexion (12) s'étendant à travers ledit trou (9) de ladite protection contre les intempéries (6) jusque dans ledit châssis (3),
ledit élément de fixation (10) comprenant en outre un premier moyen de fixation pour verrouiller ledit élément de fixation (10) à un moyen d'engagement correspondant dudit châssis (3) lors de l'activation dudit élément de fixation (10), pour ainsi attacher ladite protection contre les intempéries (6) audit châssis (3),
ladite partie de connexion (12) s'étendant dans ledit premier moyen de fixation comprenant une saillie radiale (13) avec un organe d'engagement de manière à être verrouillée par encliquetage audit moyen d'engagement correspondant dudit châssis (3) lors de l'activation dudit élément de fixation (10), pour ainsi attacher ladite protection contre les intempéries (6) audit châssis (3),
ledit premier moyen de fixation dudit élément de fixation (10) étant prévu pour s'engager avec ledit moyen d'engagement dudit organe de châssis et être libéré de celui-ci par rotation dudit élément de fixation (10),
ladite saillie radiale (13) étant en forme de sabot, une extrémité de pointe saillant vers le haut (14) de ladite forme de sabot formant ledit organe d'engagement dudit élément de fixation (10),
**caractérisé en ce**
**qu'**un organe de garniture d'étanchéité (21) destiné à venir en butée contre ladite surface supérieure de ladite protection contre les intempéries (6) est prévu sur une surface inférieure de ladite partie de tête (11), l'élasticité de la garniture d'étanchéité (21) assurant une fixation plus facile de l'élément de fixation (10).

2. Élément de fixation (10) selon la revendication 1, dans lequel ledit premier moyen de fixation dudit élément de fixation est prévu pour venir en prise avec ledit moyen d'engagement dudit organe de châssis et pour être libéré de celui-ci par une rotation dudit élément de fixation (10).

3. Élément de fixation (10) selon l'une quelconque des revendications précédentes, dans lequel ladite partie de tête (11) comprend des moyens de préhension pouvant être saisis à la main pour faire tourner ledit élément de fixation (10) de manière à assurer un engagement entre ledit premier moyen de fixation dudit élément de fixation (10) et ledit moyen d'engagement dudit châssis (3).

4. Élément de fixation (10) selon la revendication 3, dans lequel ledit moyen de préhension comprend deux renfoncements pour les doigts (15, 16) positionnés, dans une position fixée dudit élément de fixation (10), de manière à permettre à l'eau de pluie et à la neige tombant sur ladite protection contre les intempéries (6) de passer au-delà de ladite partie de tête (11).

5. Élément de fixation (10) pour protection contre les intempéries selon l'une quelconque des revendications précédentes, fabriqué en zinc ou en aluminium.

6. Élément de fixation (10) selon l'une quelconque des revendications précédentes, comprenant en outre un deuxième moyen de fixation, de préférence un fermoir à cliquet (17, 18), prévu pour être positionné en butée contre une surface inférieure de ladite protection contre les intempéries (6) lorsque ladite partie de connexion (12) s'étend à travers ledit trou (9) de ladite protection contre les intempéries (6), de manière à ce qu'en coopérant avec ladite partie de tête (11), elle ne puisse pas sensiblement être libérée de ladite protection contre les intempéries (6) et qu'elle ne puisse pas tourner par rapport à cette dernière.

7. Élément de fixation (10) selon l'une quelconque des revendications précédentes, ledit élément de fixation (10) étant configuré de telle sorte qu'une élasticité de l'organe de garniture d'étanchéité (21) contribue à permettre le passage de l'extrémité de pointe au-delà d'un bourrelet de la partie de fenêtre avec un bruit d'encliquetage et une sensation d'encliquetage indiquant à l'utilisateur que l'élément de fixation (10) a été libéré.

8. Élément de fixation (10) selon l'une quelconque des revendications précédentes, ledit élément de fixation (10) étant configuré de telle sorte qu'une élasticité combinée de l'organe de garniture d'étanchéité (21), d'organes d'étanchéité longitudinaux et d'un bourrelet de la partie de fenêtre, et de l'élément de fixation (10) lui-même permettant à l'extrémité de pointe de passer au-delà du bourrelet avec un bruit d'encliquetage et une sensation d'encliquetage indiquant à un utilisateur que ledit élément de fixation (10) a été libéré.

9. Élément de fixation (10) selon l'une quelconque des revendications précédentes, l'élément de fixation (10) étant configuré de telle sorte que l'élément de fixation (10) puisse être tourné dans n'importe quel sens autour de la partie de connexion, l'extrémité de pointe étant apte à passer au-delà d'un bourrelet saillant vers le bas du profilé d'organe de châssis de telle sorte que l'élément de fixation (10) et la protection contre les intempéries (6) soient libérés du châssis (3), une élasticité combinée de l'organe de garniture d'étanchéité (21), des organes d'étanchéité longitudinaux, du bourrelet et de l'élément de fixation (10) lui-même permettant à l'extrémité de pointe de passer au-delà du bourrelet avec un bruit d'encliquetage et une sensation d'encliquetage indiquant à un utilisateur que l'élément de fixation (10) a été libéré, et dans lequel, à partir de la position libérée, l'élément de fixation (10) est apte à être encliqueté dans sa position d'origine verrouillée de manière correspondante.

10. Protection contre les intempéries (6) et partie de fenêtre (1), comprenant un élément de fixation selon l'une quelconque des revendications précédentes, ledit élément de fixation (10) étant positionné de manière à attacher un châssis (3) de la partie de fenêtre à la protection contre les intempéries (6) couvrant ledit châssis (3), ledit élément de fixation (10) s'étendant à travers un trou périphérique (9) de ladite protection contre les intempéries (6) de manière à venir en prise avec ledit châssis (3), ledit châssis (3) comprenant des organes de châssis extrudés avec un profilé d'organe de châssis creux.

11. Protection contre les intempéries (6) et partie de fenêtre (1) selon la revendication 10, l'élément de fixation (10) étant selon la revendication 1, et ledit moyen d'engagement dudit organe de châssis comprenant un bourrelet saillant vers le bas (19), ladite extrémité de pointe (14) dudit organe d'engagement dudit élément de fixation (10) s'étendant vers le haut de manière à venir en prise avec ledit bourrelet saillant vers le bas (19) de manière à verrouiller par encliquetage ledit élément de fixation (10) et ledit organe de châssis l'un à l'autre par rotation dudit élément de fixation (10).

12. Protection contre les intempéries (6) et partie de fenêtre (1) selon la revendication 10 ou 11, ledit trou périphérique (9) étant formé dans une boursouflure (20) saillant vers le haut de ladite protection contre les intempéries (6).

13. Protection contre les intempéries (6) et partie de fenêtre (1) selon l'une quelconque des revendications 10 à 12, ledit châssis (3) sur une surface supérieure comprenant un organe d'étanchéité élastique s'étendant longitudinalement (7, 8) en butée contre une surface inférieure de ladite protection contre les intempéries (6).

14. Protection contre les intempéries (6) et partie de fenêtre (1) selon l'une quelconque des revendications 10 à 13, ladite partie de fenêtre comprenant un organe de châssis supérieur (3b), un organe de châssis inférieur (3a) et deux organes de châssis latéraux (3c) définissant ledit châssis de fenêtre (3), et un organe de cadre supérieur, un organe de cadre inférieur et deux organes de cadres latéraux définissant un cadre de fenêtre (4), ledit organe de châssis inférieur (3a) étant articulé audit organe de cadre inférieur (4a) au moyen d'une articulation pivot définissant un axe de pivotement de manière à relier par pivotement ledit châssis de fenêtre (3) audit cadre de fenêtre (4).

15. Protection contre les intempéries (6), destinée à être attachée à un profilé d'organe de châssis creux d'un châssis de fenêtre (3), **caractérisée en ce qu'**elle comprend un certain nombre d'éléments de fixation (10) selon l'une quelconque des revendications 1 à 9, des parties de tête respectives (11) desdits éléments de fixation étant positionnées en butée contre une surface supérieure de ladite protection contre les intempéries (6), des parties de connexion respectives (12) desdits éléments de fixation s'étendant à travers des trous périphériques (9) de ladite protection contre les intempéries (6).
